(19) Europäisches Patentamt / European Patent Office / Office européen des brevets

(11) **EP 4 568 051 A1**

(12) **EUROPEAN PATENT APPLICATION**
published in accordance with Art. 153(4) EPC

(43) Date of publication:
**11.06.2025  Bulletin 2025/24**

(21) Application number: **23884306.4**

(22) Date of filing: **19.07.2023**

(51) International Patent Classification (IPC):
*H02J 3/36* (2006.01)   *H02J 3/12* (2006.01)
*B60M 3/00* (2006.01)

(86) International application number:
**PCT/CN2023/108164**

(87) International publication number:
**WO 2024/093367 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **04.11.2022  CN 202211376208**

(71) Applicant: **TSINGHUA UNIVERSITY**
**Beijing, 100084 (CN)**

(72) Inventors:
• **LI, Xiaoqian**
  **Beijing 100084 (CN)**
• **LU, Chao**
  **Beijing 100084 (CN)**
• **LI, Zhanhe**
  **Beijing 100084 (CN)**
• **WEI, Yingdong**
  **Beijing 100084 (CN)**

(74) Representative: **Kransell & Wennborg KB**
**P.O. Box 2096**
**403 12 Göteborg (SE)**

(54) **APPROXIMATE OPTIMUM-BASED DYNAMIC COOPERATIVE CONTROL METHOD FOR FLEXIBLE DIRECT-CURRENT TRACTION POWER SUPPLY SYSTEM**

(57) The present disclosure relates to the field of direct current traction power supply system technologies, and more particularly, to a dynamic collaborative control method for a flexible direct current traction power supply system based on approximate optimization. The method includes: obtaining an instantaneous direct current voltage vector and an instantaneous direct current vector of a traction substation in the flexible direct current traction power supply system; decomposing the flexible direct current traction power supply system according to a circuit superposition principle, and deriving a load component of a traction substation current from the instantaneous direct current voltage vector and the instantaneous direct current vector of the traction substation based on a decomposed flexible direct current traction power supply system; calculating a collaborative component control instruction of the traction substation current according to an analytical mapping relationship between the load component of the traction substation current and the collaborative component control instruction of the traction substation current; further solving a traction substation voltage control instruction based on proportional integration and feedforward control, and controlling operation of the traction substation by using the traction substation voltage control instruction. In this way, a problem in the related art that an optimal control method only considers steady-state modeling and fails to perform real-time control accurately and rapidly is solved.

FIG. 1

The flowchart contains the following steps:

- S101: Obtaining an instantaneous direct current voltage vector and an instantaneous direct current vector of a traction substation in the flexible direct current traction power supply system
- S102: Decomposing the flexible direct current traction power supply system according to a circuit superposition principle, and deriving a load component of a traction substation current from the instantaneous direct current voltage vector and the instantaneous direct current vector of the traction substation based on a decomposed flexible direct current traction power supply system
- S103: Calculating a collaborative component control instruction of the traction substation current according to an analytical mapping relationship between the load component of the traction substation current and the collaborative component control instruction of the traction substation current
- S104: Solving a traction substation voltage control instruction based on proportional integration and feedforward control according to the collaborative component control instruction of the traction substation current, and controlling operation of the traction substation by using the traction substation voltage control instruction

EP 4 568 051 A1

**EP 4 568 051 A1**

**Description**

**CROSS-REFERENCE TO RELATED APPLICATION**

This application claims priority to Chinese Patent Application No. 202211376208.4, entitled "DYNAMIC COLLABORATIVE CONTROL METHOD FOR FLEXIBLE DIRECT CURRENT TRACTION POWER SUPPLY SYSTEM BASED ON APPROXIMATE OPTIMIZATION", and filed on November 4, 2022 by Tsinghua University.

**FIELD**

The present disclosure relates to the field of direct current traction power supply system technologies, and more particularly, to a dynamic collaborative control method for a flexible direct current traction power supply system based on approximate optimization.

**BACKGROUND**

A traction power supply system for rail transit is divided into two types: a direct current traction power supply system and an alternating current traction power supply system. Common voltage levels of the direct current traction power supply system are 750V, 1500V, and 3000V, which are commonly used in urban rail transit. In the future, there is a trend of development towards higher voltage levels such as 9kV and 24kV, which are applied to rail transit scenarios with high-power traction power supply demands such as high-speed railways and heavy-haul railways. A core power supply equipment of a traditional direct current traction power supply system is a diode rectifier unit. A flexible direct current traction power supply system is based on advanced power electronic technology and system-level collaborative control technology, and uses a converter as the core power supply equipment. The converter has an ability to flexibly control a direct current voltage, which can overcome problems of an uncontrollable direct current voltage and large voltage deviation of a conventional diode rectifier unit during traction power supply. The flexible direct current traction power supply system has many advantages such as reducing peak capacity of a traction substation, lowering voltage deviation of a contact network, and improving a utilization rate of a regenerative braking energy of a locomotive, and has a broad application prospect.

Based on system-level collaborative control, all converters in the flexible direct current traction power supply system can provide mutual power assistance and collaborative support to further improve safety, reliability, cost-effectiveness, and energy-saving benefits of the system. Therefore, a system-level collaborative control method of the flexible direct current traction power supply system is a technical means of great value.

Optimal control in an existing system-level collaborative control method for the flexible direct current traction power supply system adopts a steady-state system modeling and control method, and state variables in the system only satisfy algebraic relations. However, in an actual system, there is a dynamic control process of line inductance, the converter and the locomotive. A position of the locomotive moves in real time, and power of the locomotive changes in real time of 100ms-level. Therefore, actual operation of the traction power supply system is in a dynamic change process at all times. If only a steady-state process of the system is considered in modeling and control, real-time control is unable to be performed accurately and quickly.

**SUMMARY**

The disclosure provides a dynamic collaborative control method for a flexible direct current traction power supply system based on approximate optimization, aiming at solving a problem in the related art that an optimal control method only considers steady-state modeling and fails to perform real-time control accurately and rapidly.

In a first aspect, a dynamic collaborative control method for a flexible direct current traction power supply system based on approximate optimization is provided according to embodiments of the present disclosure. The method includes: obtaining an instantaneous direct current voltage vector and an instantaneous direct current vector of a traction substation in the flexible direct current traction power supply system; decomposing the flexible direct current traction power supply system according to a circuit superposition principle, and deriving a load component of a traction substation current from the instantaneous direct current voltage vector and the instantaneous direct current vector of the traction substation based on a decomposed flexible direct current traction power supply system; calculating a collaborative component control instruction of the traction substation current according to an analytical mapping relationship between the load component of the traction substation current and the collaborative component control instruction of the traction substation current; and solving a traction substation voltage control instruction based on proportional integration and feedforward control according to the collaborative component control instruction of the traction substation current, and controlling operation of the traction substation by using the traction substation voltage control instruction.

In an embodiment of the present disclosure, decomposing the flexible direct current traction power supply system according to the circuit superposition principle includes: setting a locomotive in the flexible direct current traction power supply system as a current source and the traction substation as a voltage source; decomposing a traction substation voltage into a common mode voltage and a differential mode voltage; and decomposing the flexible direct current traction power supply system into a load subsystem and a collaborative subsystem, where for the load subsystem, only a current source representing an energy demand of the locomotive and a voltage source representing the common mode voltage of the traction substation are retained, and for the collaborative subsystem, only a voltage source representing the differential mode voltage of the traction substation is retained.

In an embodiment of the present disclosure, deriving the load component of the traction substation current from the instantaneous direct current voltage vector and the instantaneous direct current vector of the traction substation based on the decomposed flexible direct current traction power supply system includes: decomposing, based on the decomposed flexible direct current traction power supply system, the instantaneous direct current voltage vector and the instantaneous direct current vector of the traction substation into:

$$U_s = U_{s\_cm} + U_{s\_dm},$$

and

$$I_s = I_{s\_nd} + I_{s\_cc},$$

where $U_s$ represents the instantaneous direct current voltage vector of the traction substation, $I_s$ represents the instantaneous direct current vector of the traction substation, $U_{s\_cm}$ represents a common mode component vector of the traction substation voltage, $U_{s\_dm}$ represents a differential mode component vector of the traction substation voltage, $I_{s\_nd}$ represents a load component vector of the traction substation current, $I_{s\_cc}$ represents a collaborative component vector of the traction substation current;

obtaining the differential mode component vector of the traction substation voltage according to a decomposed instantaneous direct current voltage vector of the traction substation, and calculating a branch voltage vector according to the differential mode component vector of the traction substation voltage based on Kirchhoff's voltage law;
solving a traction network current vector $I_{c\_cc}$ of the collaborative subsystem according to the branch voltage vector $U_{b\_cc}$:

$$I_{ci\_cc} = e^{-\frac{t}{\lambda i}} \left( \int_0^t \frac{U_{bi\_cc}}{l_{ci} + l_{ri}} e^{\frac{\tau}{\lambda i}} \mathrm{d}\tau \right),$$

where $I_{ci\_cc}$ and $U_{bi\_cc}$ represent i-th elements of a vector $I_{c\_cc}$ and a vector $U_{b\_cc}$, respectively, $\lambda_i$ represents a time constant of a branch between an i-th traction substation and an (i+1)-th traction substation, and $\lambda_i = (l_{ci} + l_{ri})/(r_{ci} + r_{ri})$, $r_{ci}$ represents a resistance of a contact network between the i-th traction substation and the (i+1)-th traction substation in the collaborative subsystem, $r_{ri}$ represents a resistance of a rail between the i-th traction substation and the (i+1)-th traction substation in the collaborative subsystem, t represents time, $l_{ci}$ represents inductance of the contact network between the i-th traction substation and the (i+1)-th traction substation in the collaborative subsystem, $l_{ri}$ represents inductance of the rail between the i-th traction substation and the (i+1)-th traction substation in the collaborative subsystem, $\tau$ represents a integral variable; and
calculating the collaborative component vector of the traction substation current according to the traction network current vector of the collaborative subsystem based on the Kirchhoff's voltage law, and obtaining the load component vector of the traction substation current according to a current vector decomposition result of the traction substation.

In an embodiment of the present disclosure, calculating the collaborative component control instruction of the traction substation current according to the analytical mapping relationship between the load component of the traction substation current and the collaborative component control instruction of the traction substation current includes: for a traction substation that needs to be collaboratively supported, when a load component $I_{si\_nd}$ of an i-th traction substation current is greater than an upper limit $I_{si\_lim}$ of the i-th traction substation current, enabling a collaborative component control instruction $I_{si\_cc}^*$ of the i-th traction substation current to be:

$$I_{si\_cc}{}^* = I_{si\_\text{lim}} - I_{si\_\text{nd}};$$

when the load component $I_{si\_\text{nd}}$ of the i-th traction substation current is lower than a negative number of the upper limit $I_{si\_\text{lim}}$ the *i*-th traction substation current, enabling the collaborative component control instruction $I_{si\_cc}{}^*$ of the *i*-th traction substation current to be:

$$I_{si\_cc}{}^* = -I_{si\_\text{lim}} - I_{si\_\text{nd}};$$

when a sum of the load component $I_{si\_\text{nd}}$ of the *i*-th traction substation current and a power lighting load current $I_{\text{aux}i}$ of the i-th traction substation is less than 0, enabling the collaborative component control instruction $I_{si\_cc}{}^*$ of the *i*-th traction substation current to be:

$$I_{si\_cc}{}^* = -I_{\text{aux}i} - I_{si\_\text{nd}};$$

and

for the traction substation that provides collaborative support, calculating the collaborative component control instruction of the *i*-th traction substation current by a proximity principle.

In an embodiment of the present disclosure, calculating the collaborative component control instruction of the traction substation current by the proximity principle includes: providing, only by an *(m-1)-th* traction substation and an *(m+z+1)-th* traction substation, the collaborative support, when an *m-th* traction substation to an *(m+z)-th* traction substation needs to be collaboratively supported; calculating, for the *m-th* traction substation to the *(m+z)-th* traction substation, the collaborative component control instruction of the traction substation current according to the analytical mapping relationship, and allocating, by the *(m-1)-th* traction substation to the *(m+z+1)-th* traction substation, collaborative support demands of the *m-th* traction substation to the *(m+z)-th* traction substation according to a law that the collaborative support demands are inversely proportional to resistances.

In an embodiment of the present disclosure, solving the voltage control instruction based on the proportional integration and the feedforward control according to the collaborative component control instruction of the traction substation current includes: calculating a traction network current vector instruction of the collaborative subsystem according to the collaborative component control instruction of the traction substation current based on Kirchhoff's current law; solving a branch voltage vector instruction according to the traction network current vector instruction of the collaborative subsystem and the traction network current vector of the collaborative subsystem based on the proportional integration and the feedforward control; and calculating a traction substation differential mode voltage vector instruction according to the branch voltage vector instruction, and summing a predetermined traction substation common mode voltage vector instruction and the traction substation differential mode voltage vector instruction to obtain the traction substation voltage control instruction.

In an embodiment of the present disclosure, solving the branch voltage vector instruction $U_{b\_cc}{}^*$ according to the traction network current vector instruction of the collaborative subsystem and the traction network current vector of the collaborative subsystem based on the proportional integration and the feedforward control by using:

$$U_{b\_cc}{}^* = \boldsymbol{R}\boldsymbol{I}_{c\_cc}{}^* + k_p(\boldsymbol{I}_{c\_cc}{}^* - \boldsymbol{I}_{c\_cc}) + k_i\!\int(\boldsymbol{I}_{c\_cc}{}^* - \boldsymbol{I}_{c\_cc})dt \;,$$

where $\boldsymbol{I}_{c\_cc}{}^*$ represents the traction network current vector instruction of the collaborative subsystem, $\boldsymbol{I}_{c\_cc}$ represents the traction network current vector of the collaborative subsystem, $\boldsymbol{R}$ represents a resistance matrix, $k_p$ represents a proportional coefficient of proportional integration control, $k_i$ represents an integral coefficient of the proportional integration control, and t represents time.

In an embodiment of the present disclosure, the method further includes, subsequent to obtaining the traction substation voltage control instruction: determining whether the traction substation voltage control instruction meets an operation requirement, returning part of a regenerative braking energy of the locomotive to a power grid and recalculating the collaborative component control instruction of the traction substation current when the operation requirement is not met.

The dynamic collaborative control method for the flexible direct current traction power supply system based on approximate optimization according to the embodiments of the present disclosure, in a process of system modeling and analysis, takes into account a dynamic process of the system caused by line inductance and solves system variables by a method of solving a differential equation and a matrix operation. In a process of generating system-level collaborative control quantities, the proportional integration and the feedforward control are adopted, which ensures practicability of the technical solution in dynamic control, solving a defect that a traditional optimal control method only considers steady-state modeling and control.

Additional aspects and advantages of the present disclosure will be provided at least in part in the following description, or will become apparent at least in part from the following description, or can be learned from practicing of the present disclosure.

## BRIEF DESCRIPTION OF THE DRAWINGS

The above and/or additional aspects and advantages of the present disclosure will become more apparent and more understandable from the following description of embodiments taken in conjunction with the accompanying drawings.

FIG. 1 is a flowchart of a dynamic collaborative control method for a flexible direct current traction power supply system based on approximate optimization according to embodiments of the present disclosure.
FIG. 2 is a schematic diagram of a flexible direct current traction power supply system according to the embodiments of the present disclosure.
FIG. 3 is a schematic diagram of an equivalent system of a flexible direct current traction power supply system according to the embodiments of the present disclosure.
FIG. 4 is a schematic diagram of a load subsystem according to the embodiments of the present disclosure.
FIG. 5 is a schematic diagram of a collaborative subsystem according to the embodiments of the present disclosure.

## DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

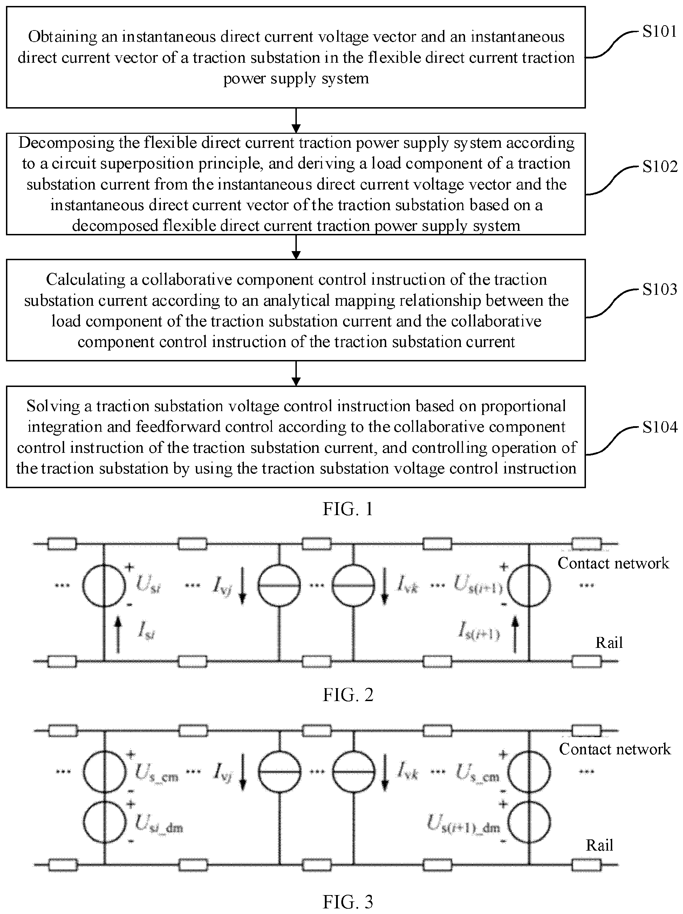

FIG. 1 is a flowchart of a dynamic collaborative control method for a flexible direct current traction power supply system based on approximate optimization according to the embodiments of the present disclosure.

As illustrated in FIG. 1, the dynamic collaborative control method for the flexible direct current traction power supply system based on the approximate optimization includes following operations at blocks.

At block S101, an instantaneous direct current voltage vector and an instantaneous direct current vector of a traction substation in the flexible direct current traction power supply system are obtained.

$U_s$ and $I_s$ represent a traction substation voltage vector and a traction substation current vector, respectively. That is, $\boldsymbol{U}_s=[U_{s1}, U_{s2}, \ldots U_{si}, \ldots U_{sN}]^{\mathrm{T}}$, $\mathbf{I}_s=[I_{s1}, I_{s2}, \ldots I_{si}, \ldots I_{sN}]^{\mathrm{T}}$, where $N$ represents a number of the traction substation. In the embodiment of the present disclosure, it is necessary to obtain a traction substation voltage $\boldsymbol{U}_s$ and a traction substation current $\boldsymbol{I}_s$ that are measured in real time.

At block S102, the flexible direct current traction power supply system is decomposed according to a circuit superposition principle. A load component of a traction substation current is derived from the instantaneous direct current voltage vector and the instantaneous direct current vector of the traction substation based on a decomposed flexible direct current traction power supply system.

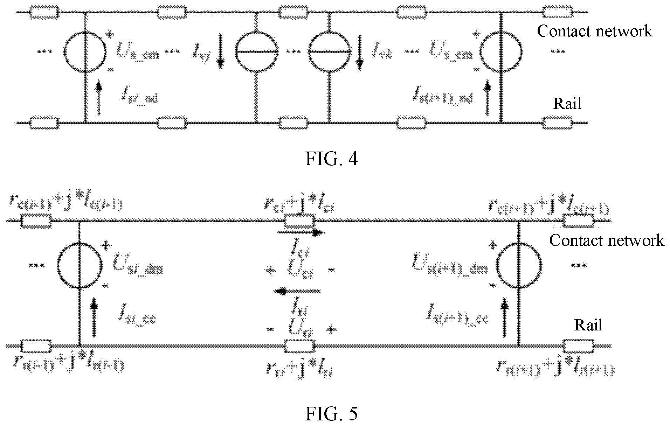

An original system is decomposed into a load subsystem and a collaborative subsystem. Assuming that a locomotive is a current source and the traction substation is a voltage source, a traction substation voltage can be decomposed into a common mode voltage and a differential mode voltage. In the load subsystem, only a current source representing an energy demand of the locomotive and a voltage source representing the common mode voltage of the traction substation are retained, and in the collaborative subsystem, only a voltage source representing the differential mode voltage of the traction substation is retained. Since traction substation voltages in the load subsystem are the same, power flow distribution of the load subsystem reflects natural distribution of the energy demand of the locomotive among traction substations. Since only a voltage difference between the traction substations is retained in the collaborative subsystem, power flow distribution of the collaborative subsystem reflects an effect of collaborative control. FIG. 2 illustrates the original system, and FIG. 3 illustrates an equivalent system. Based on a superposition principle in a circuit theory, the system in FIG. 3 can be equivalent to superposition of systems in FIG. 4 and FIG. 5. The systems in FIG. 4 and FIG. 5 are the load subsystem and the collaborative subsystem, respectively. Only a single-row line is drawn in the figure. The same modeling and analysis method can be used for a double-row line, and thus details thereof will be omitted here.

$I_{s\_nd}$ and $\boldsymbol{I}_{s\_cc}$ represent a load component vector and a collaborative component vector of the traction substation current, respectively, and $I_{s\_nd}=[I_{s1\_nd}, I_{s2\_nd}, \ldots I_{si\_nd}, \ldots I_{sN\_nd}]^{\mathrm{T}}$, $I_{s\_cc}=[I_{s1\_cc}, I_{s2\_cc}, \ldots I_{si\_cc}, \ldots I_{sN\_cc}]^{\mathrm{T}}$. $\boldsymbol{U}_{s\_cm}$ and $\boldsymbol{U}_{s\_dm}$ represent a common mode component vector and a differential mode component vector of the traction substation voltage,

respectively, and $\boldsymbol{U}_{\text{s\_cm}}=[U_{\text{s\_cm}},\ldots U_{\text{s\_cm}},\ldots U_{\text{s\_cm}}]^{\text{T}}$, $\boldsymbol{U}_{\text{s\_dm}}=[U_{\text{s1\_dm}}, U_{\text{s2\_dm}},\ldots U_{\text{si\_dm}},\ldots U_{\text{sN\_dm}}]^{\text{T}}$. A voltage, a current, a resistance, and inductance of a contact network between an i-th traction substation and a (i+1)-th traction substation in the collaborative subsystem are represented by $U_{\text{ci\_cc}}$, $I_{\text{ci\_cc}}$, $r_{ci}$, $l_{ci}$, respectively. A voltage, a current, a resistance, and inductance of a rail are represented by $U_{\text{ri\_cc}}$, $I_{\text{ri\_cc}}$, $r_{ri}$, $l_{ri}$, respectively. $\boldsymbol{I}_{\text{v}}$ represents a locomotive current vector. That is, $\boldsymbol{I}_{\text{v}}=[I_{\text{v1}}, I_{\text{v2}},\ldots I_{\text{vi}},\ldots I_{\text{vM}}]^{\text{T}}$, where M represents a number of the locomotive. A traction network current vector $\boldsymbol{I}_{\text{c\_cc}}=[I_{\text{c1\_cc}}, I_{\text{c2\_cc}},\ldots I_{\text{ci\_cc}},\ldots I_{\text{c(N-1)\_cc}}]^{\text{T}}$ of the collaborative subsystem is defined.

In the embodiment of the present disclosure, deriving the load component of the traction substation current from the instantaneous direct current voltage vector and the instantaneous direct current vector of the traction substation based on the decomposed flexible direct current traction power supply system includes: based on the decomposed flexible direct current traction power supply system, decomposing the instantaneous direct current voltage vector of the traction substation into a sum of the common mode component vector of the traction substation voltage and the differential mode component vector of the traction substation voltage and decomposing the instantaneous direct current vector into a sum of the load component vector of the traction substation current and the collaborative component vector of the traction substation current; obtaining the differential mode component vector of the traction substation voltage according to a decomposed instantaneous direct current voltage vector of the traction substation, and calculating a branch voltage vector according to the differential mode component vector of the traction substation voltage based on Kirchhoff's voltage law; solving a traction network current vector of the collaborative subsystem according to the branch voltage vector; and calculating the collaborative component vector of the traction substation current according to the traction network current vector of the collaborative subsystem based on the Kirchhoff's voltage law, and obtaining the load component vector of the traction substation current according to a current vector decomposition result of the traction substation.

Specifically, based on the superposition principle in the circuit theory:

$$\boldsymbol{U}_{\text{s}}=\boldsymbol{U}_{\text{s\_cm}}+\boldsymbol{U}_{\text{s\_dm}},$$

$$\boldsymbol{I}_{\text{s}}=\boldsymbol{I}_{\text{s\_nd}}+\boldsymbol{I}_{\text{s\_cc}},$$

where $\boldsymbol{U}_{\text{s}}$ represents the instantaneous direct current voltage vector of the traction substation, $\boldsymbol{I}_{\text{s}}$ represents the instantaneous direct current vector of the traction substation, $\boldsymbol{U}_{\text{s\_cm}}$ represents the common mode component vector of the traction substation voltage, $\boldsymbol{U}_{\text{s\_dm}}$ represents the differential mode component vector of the traction substation voltage, $\boldsymbol{I}_{\text{s\_nd}}$ represents the load component vector of the traction substation current, $\boldsymbol{I}_{\text{s\_cc}}$ represents the collaborative component vector of the traction substation current;

based on Kirchhoff's current law:

$$I_{ci\_\text{cc}} = I_{ri\_\text{cc}},$$

a branch voltage between the i-th traction substation and the (i+1)-th traction substation in the collaborative subsystem is defined:

$$U_{bi\_\text{cc}} = U_{ci\_\text{cc}} + U_{ri\_\text{cc}},$$

and

a branch voltage vector $U_{\text{b\_cc}}=[U_{\text{b1\_cc}}, U_{\text{b2\_cc}},\ldots U_{\text{bi\_cc}},\ldots U_{\text{b(N-1)\_cc}}]^{\text{T}}$ is defined. Based on the Kirchhoff's voltage law:

$$\boldsymbol{U}_{\text{b\_cc}} = \begin{bmatrix} 1 & -1 & 0 & \cdots & 0 & 0 \\ 0 & 1 & -1 & \cdots & 0 & 0 \\ 0 & 0 & 1 & \cdots & 0 & 0 \\ \vdots & \vdots & \vdots & \ddots & \vdots & \vdots \\ 0 & 0 & 0 & \cdots & -1 & 0 \\ 0 & 0 & 0 & \cdots & 1 & -1 \end{bmatrix} \boldsymbol{U}_{\text{s\_dm}},$$

a resistance matrix R is defined:

$$R=\mathrm{diag}(r_{c1}+r_{r1}, r_{c2}+r_{r2},\ldots, r_{c(N-1)}+r_{r(N-1)}),$$

and

a inductance matrix L is defined:

$$L=\mathrm{diag}(l_{c1}+l_{r1}, l_{c2}+l_{r2},\ldots, l_{c(N-1)}+l_{r(N-1)}).$$

Based on the ohm's law:

$$U_{b\_cc}=I_{c\_cc}R + L\frac{\mathrm{d}I_{c\_cc}}{\mathrm{d}t},$$

a differential equation is solved to obtain:

$$I_{ci\_cc} = e^{-\frac{t}{\lambda i}}\left(\int_0^t \frac{U_{bi\_cc}}{l_{ci}+l_{ri}}e^{\frac{\tau}{\lambda i}}\mathrm{d}\tau\right),$$

a time constant $\lambda_i$ of a branch between the i-th traction substation and the (i+1)-th traction substation is:

$$\lambda_i=(l_{ci}+l_{ri})/(r_{ci}+r_{ri})$$

where $I_{ci\_cc}$ and $U_{bi\_cc}$ represent i-th elements of a vector $I_{c\_cc}$ and a vector $U_{b\_cc}$, respectively, $r_{ci}$ represents the resistance of the contact network between the i-th traction substation and the (i+1)-th traction substation in the collaborative subsystem, $r_{ri}$ represents the resistance of the rail between the $i$-th traction substation and the ($i$+1)-th traction substation in the collaborative subsystem, t represents time, $l_{ci}$ represents the inductance of the contact network between the i-th traction substation and the ($i$+1)-th traction substation in the collaborative subsystem, $l_{ri}$ represents the inductance of the rail between the $i$-th traction substation and the ($i$+1)-th traction substation in the collaborative subsystem, $\tau$ represents a integral variable.

Based on the Kirchhoff s voltage law:

$$I_{s\_cc} = \begin{bmatrix} 1 & 0 & 0 & \cdots & 0 & 0 \\ -1 & 1 & 0 & \cdots & 0 & 0 \\ 0 & -1 & 1 & \cdots & 0 & 0 \\ \vdots & \vdots & \vdots & \ddots & \vdots & \vdots \\ 0 & 0 & 0 & \cdots & -1 & 1 \\ 0 & 0 & 0 & \cdots & 0 & -1 \end{bmatrix} I_{c\_cc},$$

For convenience, a voltage of an N-th traction substation is selected as a common mode voltage $U_{s\_cm}$. $U_{s\_dm}$ can be calculated based on (1). Therefore, $I_{s\_cc}$ can be calculated based on (5), (9), and (11), and $I_{s\_nd}$ can be calculated based on (2). A load component $I_{s\_nd}$ of the traction substation current represents a result of natural distribution of a load power demand of the locomotive in each traction substation.

At block S103, a collaborative component control instruction of the traction substation current is calculated according to an analytical mapping relationship between the load component of the traction substation current and the collaborative component control instruction of the traction substation current.

Based on mechanism research of optimal power flow, the analytical mapping relationship between the load component $I_{s\_nd}$ of the traction substation current and the collaborative component control instruction $I_{s\_cc}^*$ of an approximately optimal traction substation current is discovered. The instruction $I_{s\_cc}^*$ can be solved based on the analytical mapping, and $I_{s\_cc}^*=[I_{s1\_cc}^*, I_{s2\_cc}^*, \ldots I_{si\_cc}^*, \ldots I_{s(N-1)\_cc}^*]^T$.

In an embodiment of the present disclosure, calculating the collaborative component control instruction of the traction substation current according to the analytical mapping relationship between the load component of the traction substation current and the collaborative component control instruction of the traction substation current includes: for a traction substation that needs to be collaboratively supported, when a load component $I_{si\_nd}$ of an $i$-th traction substation current is greater than an upper limit $I_{si\_lim}$ of the i-th traction substation current, enabling a collaborative component control instruction $I_{si\_cc}{}^*$ of the $i$-th traction substation current to be:

$$I_{si\_cc}{}^* = I_{si\_lim} - I_{si\_nd};$$

when the load component $I_{si\_nd}$ of the $i$-th traction substation current is lower than a negative number of the upper limit $I_{si\_lim}$ of the $i$-th traction substation current, enabling the collaborative component control instruction $I_{si\_cc}{}^*$ of the $i$-th traction substation current to be:

$$I_{si\_cc}{}^* = -I_{si\_lim} - I_{si\_nd};$$

when a sum of the load component $I_{si\_nd}$ of the $i$-th traction substation current and a power lighting load current $I_{auxi}$ of the $i$-th traction substation is less than 0, enabling the collaborative component control instruction $I_{si\_cc}{}^*$ of the $i$-th traction substation current to be:

$$I_{si\_cc}{}^* = -I_{auxi} - I_{si\_nd};$$

and

for the traction substation that provides collaborative support, calculating the collaborative component control instruction of the $i$-th traction substation current by a proximity principle.

Taking the $i$-th traction substation as an example, there are two situations in which the collaborative support is needed for the $i$-th traction substation. Situation 1: The traction substation current exceeds the upper limit $I_{si\_lim}$ of the $i$-th traction substation current, i.e., $|I_{si\_nd}| > I_{si\_lim}$. Situation 2: The traction substation current plus the power lighting load current of the traction substation is still less than 0. That is, the traction substation needs to return power to a power grid, and a mathematical expression is $I_{si\_nd} < -I_{auxi}$.

For the situation 1, if $I_{si\_nd} > I_{si\_lim}$, $I_{si\_cc}{}^*$ is calculated as: $I_{si\_cc}{}^* = I_{si\_lim} - I_{si\_nd}$.

If $I_{si\_nd} < -I_{si\_lim}$, $I_{si\_cc}{}^*$ is calculated as: $I_{si\_cc}{}^* = -I_{si\_lim} - I_{si\_nd}$.

For the situation 2, $I_{si\_cc}{}^*$ is calculated as: $I_{si\_cc}{}^* = -I_{auxi} - I_{si\_nd}$.

For the traction substation that needs to be collaboratively supported, the collaborative component control instruction $I_{si\_cc}{}^*$ can be calculated according to $I_{si\_cc}{}^* = I_{si\_lim} - I_{si\_nd}$, $I_{si\_cc}{}^* = -I_{si\_lim} - I_{si\_nd}$, and $I_{si\_cc}{}^* = -I_{auxi} - I_{si\_nd}$. For the traction substation that provides the collaborative support, the collaborative component control instruction $I_{si\_cc}{}^*$ of the traction substation current is calculated according to the proximity principle. The proximity principle consists of two aspects. In a first aspect, if an m-th traction substation to an (m+z)-th traction substation needs to be collaboratively supported, only an (m-1)-th traction substation and an (m+z+1)-th traction substation provide the collaborative support. In another aspect, for the m-th traction substation to the (m+z)-th traction substation, their $I_{si\_cc}{}^*$ are calculated according to $I_{si\_cc}{}^* = I_{si\_lim} - I_{si\_nd}$, $I_{si\_cc}{}^* = -I_{si\_lim} - I_{si\_nd}$, and $I_{si\_cc}{}^* = -I_{auxi} - I_{si\_nd}$. The (m-1)-th traction substation and the (m+z+1)-th traction substation allocate collaborative support demands of the m-th traction substation to the (m+z)-th traction substation according to a law that the collaborative support demands are inversely proportional to resistances. The mathematical expression is:

$$I_{s(m-1)\_cc}{}^* = -\left[\sum_{j=m}^{m+z}\left(I_{sj\_cc}\sum_{i=j}^{m+z}(r_{ci}+r_{ri})\right)\right]\Bigg/\sum_{i=m-1}^{m+z}(r_{ci}+r_{ri})\,;$$

$$I_{s(m+z+1)\_cc}{}^* = -\left[\sum_{j=m}^{m+z}\left(I_{sj\_cc}\sum_{i=m-1}^{j-1}(r_{ci}+r_{ri})\right)\right]\Bigg/\sum_{i=m-1}^{m+z}(r_{ci}+r_{ri})\,.$$

At block S104, a traction substation voltage control instruction is solved based on proportional integration and feedforward control according to the collaborative component control instruction of the traction substation current, and operation of the traction substation is controlled by using the traction substation voltage control instruction.

In an embodiment of the present disclosure, solving the voltage control instruction based on the proportional integration and the feedforward control according to the collaborative component control instruction of the traction substation current includes: calculating a traction network current vector instruction of the collaborative subsystem according to the collaborative component control instruction of the traction substation current based on Kirchhoff's current law; solving a branch voltage vector instruction according to the traction network current vector instruction of the collaborative subsystem and the traction network current vector of the collaborative subsystem based on the proportional integration and the feedforward control; and calculating a traction substation differential mode voltage vector instruction according to the branch voltage vector instruction, and summing a predetermined traction substation common mode voltage vector instruction and the traction substation differential mode voltage vector instruction to obtain the traction substation voltage control instruction.

Specifically, based on the Kirchhoff's current law:

$$I_{c\_cc}{}^{*} = AI_{s\_cc}{}^{*},$$

a traction network current vector instruction $I_{c\_cc}{}^{*} = [I_{c1\_cc}{}^{*}, I_{c2\_cc}{}^{*}, ...-I_{ci\_cc}{}^{*}, ...I_{c(N-1)\_cc}{}^{*}]^{T}$ of the collaborative subsystem is defined:

$$A = \begin{bmatrix} 1 & 0 & 0 & \cdots & 0 & 0 & 0 \\ 1 & 1 & 0 & \cdots & 0 & 0 & 0 \\ 1 & 1 & 1 & \cdots & 0 & 0 & 0 \\ \vdots & \vdots & \vdots & \ddots & \vdots & \vdots & \vdots \\ 1 & 1 & 1 & \cdots & 1 & 0 & 0 \\ 1 & 1 & 1 & \cdots & 1 & 1 & 0 \end{bmatrix};$$

an instruction value $U_{b\_cc}{}^{*}$ of the branch voltage vector $U_{b\_cc}$, $U_{b\_cc}{}^{*} = [U_{b1\_cc}{}^{*}, U_{b2\_cc}{}^{*}, ... U_{bi\_cc}{}^{*}, ... U_{b(N-1)\_cc}{}^{*}]^{T}$, can be determined based on PI and the feedforward control:

$$U_{b\_cc}{}^{*} = RI_{c\_cc}{}^{*} + k_{p}(I_{c\_cc}{}^{*} - I_{c\_cc}) + k_{i}\int (I_{c\_cc}{}^{*} - I_{c\_cc})dt$$

where $k_{p}$ and $k_{i}$ represent a proportional coefficient and an integral coefficient of PI control, respectively, t represents time. Further, an instruction value $U_{s\_dm}{}^{*}$ of the traction substation differential mode voltage vector $U_{s\_dm}$, $U_{s\_dm}{}^{*} = [U_{s1\_dm}{}^{*}, U_{s2\_dm}{}^{*}, ... U_{si\_dm}{}^{*}, ...U_{s(N-1)\_dm}{}^{*}]^{T}$, can be determined based on:

$$U_{s\_dm}{}^{*} = \begin{bmatrix} 1 & 1 & \cdots & 1 & 1 \\ 0 & 1 & \cdots & 1 & 1 \\ \vdots & \vdots & \ddots & \vdots & \vdots \\ 0 & 0 & \cdots & 1 & 1 \\ 0 & 0 & \cdots & 0 & 1 \\ 0 & 0 & \cdots & 0 & 0 \end{bmatrix} U_{b\_cc}{}^{*}.$$

The traction substation common mode voltage vector $U_{s\_cm}{}^{*}$, $U_{s\_cm}{}^{*} = [U_{s\_cm}{}^{*}, U_{s\_cm}{}^{*}, ... U_{s\_cm}{}^{*}, ... U_{s\_cm}{}^{*}]^{T}$, can be specified arbitrarily, but it is necessary to ensure that a system voltage meets an operation requirement. To minimize network loss of a system, $U_{s\_cm}{}^{*}$ is generally selected, in such a manner that a maximum traction substation voltage reaches a maximum value of an operation constraint.

Finally, the traction substation voltage control instruction $U_{s}{}^{*}$ can be calculated as follows:

$$U_{s}{}^{*} = U_{s\_cm}{}^{*} + U_{s\_dm}{}^{*}.$$

In an embodiment of the present disclosure, the method further includes, subsequent to obtaining the traction substation voltage control instruction: determining whether the traction substation voltage control instruction meets an operation requirement, returning part of a regenerative braking energy of the locomotive to a power grid and recalculating the collaborative component control instruction of the traction substation current when the operation requirement is not met.

After calculation is completed, it is necessary to determine whether $U_{s}{}^{*}$ meets the operation requirement. If not, a certain amount of the regenerative braking energy of the locomotive is allowed to be returned to the power grid. A previous step is returned to and the collaborative component instruction $I_{s\_cc}^{*}$ of the traction substation current is recalculated.

In the above-described embodiments, a current constraint of the traction substation can be changed to a power constraint. If the operation constraint of the traction substation converter is not the current upper limit $I_{si\_lim}$ but a power upper limit value $P_{si\_lim}$ is given, $I_{si\_lim}$ can be continuously updated according to:

$$I_{si\_lim}=P_{si\_lim}/U_{si},$$

in this way, the power constraint of the traction substation is considered.

In the above-described embodiments, an energy management method is also applicable if a voltage source converter of the traction substation is replaced by a current source converter. It only needs to directly use a current reference instruction, i.e., $I_{s\_nd}+I_{s\_cc}^{*}$, to control the current source converter of the traction substation, without calculating a voltage reference instruction of the traction substation based on the current reference instruction.

The dynamic collaborative control method for the flexible direct current traction power supply system based on approximate optimization according to the embodiments of the present disclosure, in a process of system modeling and analysis, takes into account a dynamic process of the system caused by line inductance and solves system variables by a method of solving a differential equation and a matrix operation. In a process of generating system-level collaborative control quantities, the proportional integration and the feedforward control are adopted, which ensures practicability of the technical solution in dynamic control, solving a defect that a traditional optimal control method only considers steady-state modeling and control.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics can be combined in any suitable manner in one or N embodiments or examples. In addition, different embodiments or examples and features of different embodiments or examples described in the specification can be combined by those skilled in the art without mutual contradiction.

In addition, the terms "first" and "second" are only used for descriptive purposes, and cannot be understood as indicating or implying relative importance or implicitly indicating the number of indicated technical features. Therefore, the features associated with "first" and "second" can explicitly or implicitly include at least one of the features. In the description of the present disclosure, "N" means at least two, such as two or three, unless otherwise specifically defined.

Any process or method described in a flowchart or described herein in other ways can be understood to include one or N modules, segments, or portions of codes of executable instructions for achieving specific logical functions or steps in the process. The scope of a preferred embodiment of the present disclosure includes other implementations. A function can be performed not in a sequence shown or discussed, including a substantially simultaneous manner or a reverse sequence based on the function involved, which should be understood by those skilled in the art to which the embodiments of the present disclosure belong.

**Claims**

1. A dynamic collaborative control method for a flexible direct current traction power supply system based on approximate optimization, the method comprising:

    obtaining an instantaneous direct current voltage vector and an instantaneous direct current vector of a traction substation in the flexible direct current traction power supply system;
    decomposing the flexible direct current traction power supply system according to a circuit superposition principle, and deriving a load component of a traction substation current from the instantaneous direct current voltage vector and the instantaneous direct current vector of the traction substation based on a decomposed flexible direct current traction power supply system;
    calculating a collaborative component control instruction of the traction substation current according to an analytical mapping relationship between the load component of the traction substation current and the collaborative component control instruction of the traction substation current; and
    solving a traction substation voltage control instruction based on proportional integration and feedforward control according to the collaborative component control instruction of the traction substation current, and controlling operation of the traction substation by using the traction substation voltage control instruction.

2.  The method according to claim 1, wherein decomposing the flexible direct current traction power supply system according to the circuit superposition principle comprises:

    setting a locomotive in the flexible direct current traction power supply system as a current source and the traction substation as a voltage source;
    decomposing a traction substation voltage into a common mode voltage and a differential mode voltage; and decomposing the flexible direct current traction power supply system into a load subsystem and a collaborative subsystem, wherein for the load subsystem, only a current source representing an energy demand of the locomotive and a voltage source representing the common mode voltage of the traction substation are retained, and for the collaborative subsystem, only a voltage source representing the differential mode voltage of the traction substation is retained.

3.  The method according to claim 2, wherein deriving the load component of the traction substation current from the instantaneous direct current voltage vector and the instantaneous direct current vector of the traction substation based on the decomposed flexible direct current traction power supply system comprises:

    decomposing, based on the decomposed flexible direct current traction power supply system, the instantaneous direct current voltage vector and the instantaneous direct current vector of the traction substation into:

    $$U_\mathrm{s}=U_\mathrm{s\_cm}+U_\mathrm{s\_dm},$$

    and

    $$I_\mathrm{s}=I_\mathrm{s\_nd}+I_\mathrm{s\_cc},$$

    where $U_\mathrm{s}$ represents the instantaneous direct current voltage vector of the traction substation, $I_\mathrm{s}$ represents the instantaneous direct current vector of the traction substation, $U_\mathrm{s\_cm}$ represents a common mode component vector of the traction substation voltage, $U_\mathrm{s\_dm}$ represents a differential mode component vector of the traction substation voltage, $I_\mathrm{s\_nd}$ represents a load component vector of the traction substation current, $I_\mathrm{s\_cc}$ represents a collaborative component vector of the traction substation current;
    obtaining the differential mode component vector of the traction substation voltage according to a decomposed instantaneous direct current voltage vector of the traction substation, and calculating a branch voltage vector according to the differential mode component vector of the traction substation voltage based on Kirchhoff's voltage law;
    solving a traction network current vector $I_\mathrm{c\_cc}$ of the collaborative subsystem according to the branch voltage vector $U_\mathrm{b\_cc}$:

    $$I_{ci\_cc} = e^{-\frac{t}{\lambda i}}\left(\int_0^t \frac{U_{bi\_cc}}{l_{ci}+l_{ri}}e^{\frac{\tau}{\lambda i}}\mathrm{d}\tau\right),$$

    where $I_{ci\_cc}$ and $U_{bi\_cc}$ represent i-th elements of a vector $I_\mathrm{c\_cc}$ and a vector $U_\mathrm{b\_cc}$, respectively, $\lambda_i$ represents a time constant of a branch between an $i$-th traction substation and an $(i+1)$-th traction substation, and $\lambda_i=(l_{ci}+l_{ri})/(r_{ci}+r_{ri})$, $r_{ci}$ represents a resistance of a contact network between the $i$-th traction substation and the $(i+1)$-th traction substation in the collaborative subsystem, $r_{ri}$ represents a resistance of a rail between the $i$-th traction substation and the $(i+1)$-th traction substation in the collaborative subsystem, t represents time, $l_{ci}$ represents inductance of the contact network between the $i$-th traction substation and the $(i+1)$-th traction substation in the collaborative subsystem, $l_{ri}$ represents inductance of the rail between the $i$-th traction substation and the $(i+1)$-th traction substation in the collaborative subsystem, $\tau$ represents a integral variable; and
    calculating the collaborative component vector of the traction substation current according to the traction network current vector of the collaborative subsystem based on the Kirchhoff's voltage law, and obtaining the load component vector of the traction substation current according to a current vector decomposition result of the traction substation.

4.  The method according to claim 1, wherein calculating the collaborative component control instruction of the traction substation current according to the analytical mapping relationship between the load component of the traction substation current and the collaborative component control instruction of the traction substation current comprises:

for a traction substation that needs to be collaboratively supported, when a load component $I_{si\_nd}$ of an i-th traction substation current is greater than an upper limit $I_{si\_lim}$ of the $i$-th traction substation current, enabling a collaborative component control instruction $I_{si\_cc}{}^*$ of the $i$-th traction substation current to be:

$$I_{si\_cc}{}^* = I_{si\_lim} - I_{si\_nd};$$

when the load component $I_{si\_nd}$ of the $i$-th traction substation current is lower than a negative number of the upper limit $I_{si\_lim}$ the $i$-th traction substation current, enabling the collaborative component control instruction $I_{si\_cc}{}^*$ of the $i$-th traction substation current to be:

$$I_{si\_cc}{}^* = -I_{si\_lim} - I_{si\_nd};$$

when a sum of the load component $I_{si\_nd}$ of the $i$-th traction substation current and a power lighting load current $I_{auxi}$ of the $i$-th traction substation is less than 0, enabling the collaborative component control instruction $I_{si\_cc}{}^*$ of the $i$-th traction substation current to be:

$$I_{si\_cc}{}^* = -I_{auxi} - I_{si\_nd};$$

and
for the traction substation that provides collaborative support, calculating the collaborative component control instruction of the $i$-th traction substation current by a proximity principle.

5.  The method according to claim 4, wherein calculating the collaborative component control instruction of the traction substation current by the proximity principle comprises:

providing, only by an *(m-1)-th* traction substation and an *(m+z+1)-th* traction substation, the collaborative support, when an *m-th* traction substation to an *(m+z)-th* traction substation needs to be collaboratively supported;
calculating, for the *m-th* traction substation to the *(m+z)-th* traction substation, the collaborative component control instruction of the traction substation current according to the analytical mapping relationship, and allocating, by the *(m-1)-th* traction substation to the *(m+z+1)-th* traction substation, collaborative support demands of the *m-th* traction substation to the *(m+z)-th* traction substation according to a law that the collaborative support demands are inversely proportional to resistances.

6.  The method according to claim 2 or 3, wherein solving the voltage control instruction based on the proportional integration and the feedforward control according to the collaborative component control instruction of the traction substation current comprises:

calculating a traction network current vector instruction of the collaborative subsystem according to the collaborative component control instruction of the traction substation current based on Kirchhoff's current law;
solving a branch voltage vector instruction according to the traction network current vector instruction of the collaborative subsystem and the traction network current vector of the collaborative subsystem based on the proportional integration and the feedforward control; and
calculating a traction substation differential mode voltage vector instruction according to the branch voltage vector instruction, and summing a predetermined traction substation common mode voltage vector instruction and the traction substation differential mode voltage vector instruction to obtain the traction substation voltage control instruction.

7.  The method according to claim 6, wherein solving the branch voltage vector instruction $U_{b\_cc}{}^*$ according to the traction network current vector instruction of the collaborative subsystem and the traction network current vector of the collaborative subsystem based on the proportional integration and the feedforward control by using:

$$U_{b\_cc}{}^* = \boldsymbol{R}\boldsymbol{I}_{c\_cc}{}^* + k_p(\boldsymbol{I}_{c\_cc}{}^* - \boldsymbol{I}_{c\_cc}) + k_i \int (\boldsymbol{I}_{c\_cc}{}^* - \boldsymbol{I}_{c\_cc})dt ,$$

where $I_{c\_cc}^{*}$ represents the traction network current vector instruction of the collaborative subsystem, $I_{c\_cc}$ represents the traction network current vector of the collaborative subsystem, $R$ represents a resistance matrix, $k_p$ represents a proportional coefficient of proportional integration control, $k_i$ represents an integral coefficient of the proportional integration control, and t represents time.

8. The method according to claim 6, further comprising, subsequent to obtaining the traction substation voltage control instruction:
determining whether the traction substation voltage control instruction meets an operation requirement, returning part of a regenerative braking energy of the locomotive to a power grid and recalculating the collaborative component control instruction of the traction substation current when the operation requirement is not met.

| | |
|---|---|
| Obtaining an instantaneous direct current voltage vector and an instantaneous direct current vector of a traction substation in the flexible direct current traction power supply system | S101 |

↓

| | |
|---|---|
| Decomposing the flexible direct current traction power supply system according to a circuit superposition principle, and deriving a load component of a traction substation current from the instantaneous direct current voltage vector and the instantaneous direct current vector of the traction substation based on a decomposed flexible direct current traction power supply system | S102 |

↓

| | |
|---|---|
| Calculating a collaborative component control instruction of the traction substation current according to an analytical mapping relationship between the load component of the traction substation current and the collaborative component control instruction of the traction substation current | S103 |

↓

| | |
|---|---|
| Solving a traction substation voltage control instruction based on proportional integration and feedforward control according to the collaborative component control instruction of the traction substation current, and controlling operation of the traction substation by using the traction substation voltage control instruction | S104 |

FIG. 1

FIG. 2

FIG. 3

FIG. 4

FIG. 5

## INTERNATIONAL SEARCH REPORT

| International application No. |
|---|
| **PCT/CN2023/108164** |

**A. CLASSIFICATION OF SUBJECT MATTER**

H02J 3/36(2006.01)i;  H02J 3/12(2006.01)i;  B60M 3/00(2006.01)i

According to International Patent Classification (IPC) or to both national classification and IPC

**B. FIELDS SEARCHED**

Minimum documentation searched (classification system followed by classification symbols)

IPC：H02J B60M

Documentation searched other than minimum documentation to the extent that such documents are included in the fields searched

Electronic data base consulted during the international search (name of data base and, where practicable, search terms used)

CNTXT; CNABS; CNKI; VEN; DWPI; USTXT; WOTXT; EPTXT: 供电, 直流, 牵引, 叠加原理, 最优, 比例积分, 映射, supply, direct current, DC, superposition theorem, optimization, proportional integral, PID, mapping

**C. DOCUMENTS CONSIDERED TO BE RELEVANT**

| Category* | Citation of document, with indication, where appropriate, of the relevant passages | Relevant to claim No. |
|---|---|---|
| PX | CN 115425672 A (TSINGHUA UNIVERSITY) 02 December 2022 (2022-12-02) <br> claims 1-8 | 1-8 |
| A | CN 114725975 A (TSINGHUA UNIVERSITY) 08 July 2022 (2022-07-08) <br> description, paragraphs [0004]-[0133], and figures 1-8 | 1-8 |
| A | CN 111313443 A (ZHUZHOU CRRC TIMES ELECTRIC CO., LTD.) 19 June 2020 <br> (2020-06-19) <br> entire document | 1-8 |
| A | CN 112977077 A (TIANJIN UNIVERSITY) 18 June 2021 (2021-06-18) <br> entire document | 1-8 |
| A | CN 110829435 A (SOUTHWEST JIAOTONG UNIVERSITY) 21 February 2020 <br> (2020-02-21) <br> entire document | 1-8 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 October 2023** | **09 November 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/108164**

| Patent document cited in search report | | | Publication date (day/month/year) | Patent family member(s) | | | Publication date (day/month/year) |
|---|---|---|---|---|---|---|---|
| CN | 115425672 | A | 02 December 2022 | CN | 115425672 | B | 17 February 2023 |
| CN | 114725975 | A | 08 July 2022 | None | | | |
| CN | 111313443 | A | 19 June 2020 | WO | 2021184693 | A1 | 23 September 2021 |
| CN | 112977077 | A | 18 June 2021 | CN | 112977077 | B | 10 June 2022 |
| CN | 110829435 | A | 21 February 2020 | CN | 110829435 | B | 13 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211376208